# EUROPÄISCHE PATENTANMELDUNG

(11) **EP 2 098 844 A1**
(43) Veröffentlichungstag der Anmeldung: **09.09.2009**
(21) Anmeldenummer: 09002927.3
(22) Anmeldetag: 02.03.2009
(51) Int. Cl.: G01L 5/20, B60Q 1/48

(54) **Verfahren und Vorrichtung zur Erkennung einer Berührung eines Bordsteins durch ein Fahrzeug**

(30) Priorität: 06.03.2008 DE 102008012912
(71) Anmelder: Valeo Schalter und Sensoren GmbH, 74321 Bietigheim-Bissingen (DE)
(72) Erfinder: Hoffsommer, Klaus, 74321 Bietigheim-Bissingen (DE); Jecker, Nicolas, 73728 Esslingen (DE)

(57) **Zusammenfassung**

Es wird ein Verfahren zur Erkennung einer Berührung eines Bordsteins (12,32) durch ein Fahrzeug (10,30) beschrieben, bei welchem Verfahren ein aktueller Fahrwiderstand des Fahrzeugs (10,30) ermittelt, und in Verbindung mit einer Plausibilisierung bei einer Änderung des Fahrwiderstands auf eine Bordsteinberührung geschlossen wird. Erfindungsgemäß ist vorgesehen, dass die Plausibilisierung anhand einer fahrwiderstandsunabhängigen Größe Abstand (D) zu einem Hindernis, Verlauf des Drehmoments (41) bzw. des Lenkwinkels (42) über einen Zeitraum erfolgt. Außerdem werden eine Fahrassistenzvorrichtung mit Mitteln zur Durchführung des Verfahrens, sowie ein Computerprogrammprodukt welches einen Mikroprozessor mit zugehörigen Speichermitteln zur Durchführung des Verfahrens veranlasst beschrieben.

## Beschreibung

### Stand der Technik

Die Erfindung betrifft ein Verfahren und eine Vorrichtung zur Erkennung einer Berührung eines Bordsteins durch ein Fahrzeug gemäß dem Oberbegriff des Anspruchs 1 bzw. des Anspruchs 9, sowie ein Computerprogrammprodukt gemäß dem Oberbegriff des Anspruchs 11.

Als Einparksysteme bezeichnete Fahrassistenzvorrichtungen zur Unterstützung eines Fahrers eines Fahrzeugs beim Einparken, helfen dem Fahrer eines Fahrzeugs aktiv in eine Parklücke längs zur Fahrbahn einzuparken. Dabei vermißt das Einparksystem mit seitlich am Fahrzeug angebrachten Sensoren eine mögliche Parklücke, berechnet aus den Lückendaten eine Einparktrajektorie und steuert das Fahrzeug durch aktiven Lenkeingriff in die Parklücke. Während des Einparkvorgangs bzw. beim Einparken wird die Distanz zu die Parklücke begrenzenden Objekten durch Ultraschallsensoren (Ultrasonic Park Assist Sensoren; UPA-Sensoren) überwacht.

Es ist an sich bekannt, Hindernisse im Umfeld eines Fahrzeugs beispielsweise durch Abstandsmessungen beispielsweise mittels Ultraschallsensoren zu erkennen bzw. zu erfassen. Insbesondere Hindernisse in Form eines Bord- oder Randsteins, die sich nur wenig über die Fahrbahnoberfläche bis deutlich unterhalb des Einbauorts von beispielsweise auf Höhe der Stoßstangen eines Fahrzeugs angeordneten Ultraschallsensoren erheben, können insbesondere bei dichter Annäherung des Fahrzeugs nicht mehr erfasst werden.

Dadurch kann es bei einem Einparksystem vorkommen, dass eine Fahrbahnbegrenzung in Form eines Bord- bzw. Randsteins nicht oder nur unzureichend erkannt wird, weshalb eine zusätzliche Möglichkeit einer Erkennung einer Bordsteinberührung vorgesehen sein kann.

Durch die EP 1 642 767 A1 ist ein Einparksystem bekannt, bei dem ein Fahrwiderstand des Fahrzeugs so ausgewertet wird, dass bei einer Änderung des Fahrwiderstands über ein vorgegebenes Maß auf eine Bordsteinberührung rückgeschlossen wird. Dabei ist vorgesehen, den Fahrwiderstand über Elemente des Antriebsstrangs zu ermitteln bzw. abzugreifen, beispielsweise über die Motorsteuerung, über die z.B. das vom Motor abgegebene Drehmoment und/oder eine Stellung des Gaspedals erfassbar ist, oder über die Getriebesteuerung, bei der beispielsweise die Stellung des Kupplungspedals erfassbar ist. Weiterhin kann zur Ermittlung des Fahrwiderstands der Reifenluftdruck bzw. der Druck in den Reifen des Fahrzeugs herangezogen werden, oder der Bremsdruck ausgewertet werden, oder ein Signal eines in Längsrichtung des Fahrzeugs angeordneten Beschleunigungssensors. Bei letzterem wird aus einer Beschleunigungsänderung auf einen erhöhten Fahrtwiderstand geschlossen. Eine Plausibilisierung ist dabei dadurch vorgesehen, dass nur dann auf einen erhöhten oder allgemein veränderten Fahrwiderstand geschlossen wird, wenn mehr als nur eine Größe einen höheren Fahrwiderstand anzeigt.

Als eine Aufgabe der Erfindung kann angesehen werden, ein zuverlässigeres, gegenüber dem Stand der Technik verbessertes und gleichzeitig kostengünstiges Verfahren zu entwickeln, mit dem festgestellt werden kann, ob ein Fahrzeug beispielsweise beim Ein- oder Ausparken einen Bord- bzw. Randstein berührt.

### Offenbarung der Erfindung

Die Aufgabe wird gelöst durch ein Verfahren mit den Merkmalen des Anspruchs 1.

Bei einem erfindungsgemäßen Verfahren zur Erkennung einer Berührung eines Bordsteins durch ein Fahrzeug ist demnach vorgesehen, einen aktuellen Fahrwiderstand des Fahrzeugs zu ermitteln, und in Verbindung mit einer Plausibilisierung bei einer Änderung des Fahrwiderstands auf eine Bordsteinberührung zu schließen, wobei die Plausibilisierung anhand mindestens einer fahrwiderstandsunabhängigen Größe erfolgt. Dadurch ist sichergestellt, dass eine Änderung des Fahrwiderstands nicht durch ein anderes Ereignis als durch eine Bordsteinberührung, wie beispielsweise durch Kontakt mit einem anderen Hindernis, verursacht wird. So kann durch ein fahrwiderstandsunabhängiges Ausschlussverfahren zuverlässiger als beim Stand der Technik auf eine Bordsteinberührung geschlossen werden. Durch Verwendung einer oder mehrerer geeigneter fahrwiderstandsunabhängiger Größen, die beispielsweise durch bereits im Fahrzeug verbaute Einrichtungen und Systeme ermittelt werden können, wird ein gegenüber dem Stand der Technik verbessertes und gleichzeitig kostengünstig zu verwirküchendes Verfahren zur Verfügung gestellt.

So kann die fahrwiderstandsunabhängige Größe Abstandsdaten zu einem Hindernis umfassen, wobei bei einer Änderung, insbesondere Zunahme, des Fahrwiderstands zu einem Zeitpunkt in Verbindung mit zu dem selben Zeitpunkt einen vorgebbaren Mindestwert überschreitenden Abstandsdaten auf eine Bordsteinberührung geschlossen wird. Um sicher zu sein, dass eine auf eine Fahrtwiderstandsänderung durch eine Bordsteinberührung hindeutende die Abbremsung nicht durch einen Stoßstangekollision, sondern durch eine Berührung mindestens eines Rads mit einem Bord- bzw. Randstein verursacht wurde, können erfindungsgemäß zur Plausibilisierung optional Entfernungs- bzw. Abstandsdaten eines Entfernungs- bzw. Abstandsmeßsystems mit ausgewertet werden, so dass abgesichert wird, dass sowohl vorne als auch hinten kein Hindernis die Stoßstange bzw. den Stoßfänger berührt.

Alternativ oder zusätzlich kann die fahrwiderstandsunabhängige Größe ein Drehmoment in der Lenkstange des Fahrzeugs umfassen, wobei bei einer Änderung, insbesondere Zunahme, des Fahrwiderstands zu einem Zeitpunkt in Verbindung mit einem zu dem selben Zeitpunkt einen vorgebbaren Mindestwert überschreitenden Drehmoment in der Lenkstange auf eine Bordsteinberührung geschlossen wird.

Weiterhin kann die fahrwiderstandsunabhängige Größe alternativ oder zusätzlich einen Lenkwinkel des Fahrzeugs umfassen, wobei bei einer Änderung, insbesondere Zunahme, des Fahrwiderstands zu einem Zeitpunkt in Verbindung mit einer zu demselben Zeitpunkt stattfindenden Lenkwinkeländerung auf eine Bordsteinberührung geschlossen wird.

Beim Vorwärtsfahren kann die Plausibilisierung wahlweise oder zusätzlich beispielsweise durch Überwachung des Lenkwinkels erfolgen. Falls ein vorderes Rad den Randstein berührt wird das Rad um eine vertikale Achse verschwenkt bzw. weggedrückt. Das verursacht sowohl eine Lenkwinkeländerung, als auch ein Drehmoment in der Lenkstange. Somit eignet sich neben einer Überwachung des Lenkwinkels ebenso eine Überwachung des über die Lenkstange übertragenen Drehmoments. Diese beide Ereignisse können auch überwacht werden, um abzusichern, dass ein Vorderrad eine Bordsteinberührung hatte und nicht die Stoßstange bzw. der Stoßfänger.

Eine vorteilhafte Ausgestaltung des erfindungsgemäßen Verfahrens sieht vor, beispielsweise beim langsamen Einparken Veränderungen im Signal von einem Längsbeschleunigungssensor und/oder einem Quer- bzw. Lateralbeschleunigungssensor und/oder einem Gierratensensor zu analysieren, um zu erkennen, ob das Fahrzeug durch eine Änderung des Fahrwiderstands eine starke Abbremsung erfährt bzw. erfahren hat. Dies ist durch Umschwung in den jeweiligen Signalen zu erkennen. In Fahrzeugen sind häufig Abstandsmeßsysteme sowie auch Sicherheitssysteme wie beispielsweise Elektronische Stabilitätsprogramme (ESP) und Lenksysteme mit Lenkwinkelsensoren zur Lenkwinkelerfassung montiert. Um möglichst kostengünstig auf eine Bordsteinberührung zu schließen ist daher erfindungsgemäß vorgesehen, Sensoren bzw. Messwerte von vorzugsweise ohnehin in einem Fahrzeug verbauten Systemen zu nutzen, um eine Bordsteinberührung zuverlässig zu erkennen bzw. zu plausibilisieren. Ein erfindungsgemäßes Verfahren nutzt daher primär beispielsweise von einem ESP-System verfügbaren Daten bzw. Signale für Längs- und Querbeschleunigung, sowie für die Gierrate, um zunächst auf eine Bordsteinberührung zu schließen. Eine anschließende Plausibilisierung erfolgt durch von diesen Werten unabhängige Größen bzw. Daten.

Eine andere vorteilhafte Ausgestaltung der Erfindung sieht vor, dass zusätzlich ein den Bremsdruck wiedergebendes Bremssignal überwacht wird, um sicherzustellen dass eine Änderung des Fahrwiderstands durch einen Bordstein und nicht durch normales Abbremsen zustande gekommen ist.

Eine besonders vorteilhafte Ausgestaltung der Erfindung sieht vor, dass eine zusätzliche Plausibilisierung anhand von Motorsteuerdaten vorgesehen ist. Kommt es beispielsweise bei einem Fahrzeug mit Automatikgetriebe trotz Wählhebelstellung in einer Fahrstufe und Betätigung des Gaspedals zu keiner Fahrzeugbewegung, obgleich kurz vorher die selbe Gaspedalstellung und die selbe Wählhebelstellung eine Fahrzeugbewegung zur Folge hatte, kann zusätzlich auf eine Bordsteinberührung geschlossen werden. Bei einem Fahrzeug mit Handschaltung erlaubt ein Vergleich der Gaspedalstellung zur Motordrehzahl einen ähnlichen Schluss. Beides dient jedoch vorzugsweise ausschließlich einer zusätzlichen Plausibilisierung.

Eine zusätzliche, besonders vorteilhafte Ausgestaltung der Erfindung sieht vor, dass eine Änderung des Fahrwiderstands durch Auswertung einer geforderten Motorleistung ermittelt wird. Zusätzlich oder anstelle der obigen Möglichkeiten kann speziell für sehr langsames Anfahren an den Bordstein die geforderte Motorleistung ausgewertet werden. Dies ist entweder direkt oder aus einem Vergleich Gaspedalstellung/Motordrehzahl und Fahrzeugbewegung möglich.

Die Erfindung ist insbesondere in Verbindung mit einer Fahrassistenzvorrichtung zur Unterstützung eines Fahrers eines Fahrzeuges beim Ein- und/oder Ausparken in eine bzw. aus einer Parklücke vorteilhaft anwendbar, welche Fahrassistenzvorrichtung Mittel zur Durchführung des Verfahrens umfasst. Diese Mittel bestehen zum einen aus geeigneten Sensoren bzw. Erfassungseinrichtungen, aus deren Daten bzw. Signalen auf eine Änderung des Fahrwiderstandes geschlossen werden kann. Geeignete Sensoren sind beispielsweise Beschleunigungssensoren zur Erfassung von Längs- und/oder Querbeschleunigungen und/oder einer Gierrate des Fahrzeugs. Geeignete Erfassungseinrichtungen können beispielsweise auf Motorsteuerdaten zugreifen, um über Fahrgeschwindigkeit und abgeforderte Motorleistung auf eine Fahrwiderstandsänderung zu schließen. Die Mittel zur Durchführung des Verfahrens bestehen darüber hinaus aus geeigneten Sensoren bzw. Erfassungseinrichtungen, deren Daten bzw. Signale unabhängig von einer Änderung des Fahrwiderstandes sind, aber deren Daten bzw. Signale direkt oder durch Ausschluss auf eine Bordsteinberührung rückschließen lassen. Solche Sensoren oder Erfassungseinrichtungen sind beispielsweise Ultraschallsensoren, mit denen Abstände zu Hindernissen bestimmt werden können, wobei bei einen Mindestabstand nicht unterschreitenden Abstandsdaten und damit nicht vorhandener Berührung eines Hindernisses bei gleichzeitiger Änderung des Fahrwiderstands durch Ausschluss auf eine Bordsteinberührung geschlossen werden kann. Ebenso ist denkbar, einen Lenkwinkelsensor zu verwenden. Hier zeigt ein lenkbares Rad bei Berührung eines Bordsteins einen Ausschlag der in Form einer Lenkwinkeländerung zum Zeitpunkt der Änderung des Fahrwiderstands erfasst und zur Plausibilisierung herangezogen werden kann.

Eine vorteilhafte Anwendung des erfindungsgemäßen Verfahrens ergibt sich in Verbindung mit einer Fahrassistenzvorrichtung, welche ein geführtes Ein-und/oder Ausparken oder ein halbautomatisches Ein- und/oder Ausparken, oder ein vollautomatisches Ein- und/oder Ausparken ermöglicht.

Eine besonders vorteilhaften Ausgestaltung der Erfindung betrifft ein Computerprogrammprodukt gespeichert auf einem computerverwendbaren Medium, umfassend computerlesbare Programmittel, welche bei Ausführung des Computerprogrammprodukts auf einem Mikroprozessor mit zugehörigen Speichermitteln oder auf einem Computer diesen zur Durchführung eines oben beschriebenen, erfindungsgemäßen Verfahrens veranlassen.

### Kurze Beschreibung der Zeichnung

Ausführungsbeispiele der Erfindung werden nachfolgend anhand der Figuren der Zeichnung erläutert. Es zeigen:
- Fig. 1: Eine schematische Darstellung einer ersten Situation, bei der ein hinteres rechtes Rad eines Fahrzeugs einen Bord- bzw. Randstein berührt.
- Fig. 2: Eine schematische Darstellung eines Verlaufs eines Längsbeschleunigungssignals (Fig. 2a)), eines Querbeschleunigungssignals (Fig. 2b)) und eines Gierratesignals (Fig. 2c)) während der Bordsteinberührung in Fig. 1.
- Fig. 3: Eine schematische Darstellung einer zweiten Situation, bei der ein vorderes rechtes Rad eines Fahrzeugs einen Bord- bzw. Randstein berührt.
- Fig. 4: Eine schematische Darstellung des Verlaufs des Drehmoments in der Lenkstange (Fig. 4a)) und des Lenkwinkels (Fig. 4b)) während der Bordsteinberührung in Fig. 3.

### Wege zur Ausführung der Erfindung

In Fahrzeugen sind häufig Abstandsmeßsysteme sowie auch Sicherheitssysteme wie beispielsweise ESP und Lenksysteme mit Lenkwinkelsensoren zur Lenkwinkelerfassung montiert.

Erfindungsgemäß ist vorgesehen, Sensoren bzw. Messwerte von vorzugsweise ohnehin in einem Fahrzeug verbauten Systemen zu nutzen, um eine Bordsteinberührung zuverlässig zu erkennen bzw. zu plausibilisieren.

Ein erfindungsgemäßes Verfahren nutzt daher primär beispielsweise von einem ESP-System verfügbaren Daten bzw. Signale für Längs- und Querbeschleunigung, sowie Gierrate, um zunächst auf eine Bordsteinberührung zu schließen. Eine anschließende Plausibilisierung erfolgt durch von diesen Werten unabhängigen Daten.

Zur Plausibilisierung eignen sich insbesondere Daten in Form von Lenksignalen eines Lenksystems und/oder Messwerte eines Abstandmesssystems.

Das erfindungsgemäße Verfahren sieht vor, beim langsamen Einparken Veränderungen im Signal von einem Längsbeschleunigungssensor und/oder einem Quer- bzw. Lateralbeschleunigungssensor und/oder einem Gierratensensor zu analysieren, um zu erkennen, ob das Fahrzeug eine starke Abbremsung erfährt bzw. erfahren hat. Dies ist durch Umschwung in den jeweiligen Signalen zu erkennen.

Um sicher zu sein, dass die Abbremsung nicht durch einen Stoßstangekollision, sondern durch eine Berührung mindestens eines Rads mit einem Bord- bzw. Randstein verursacht wurde, können erfindungsgemäß zur Plausibilisierung optional Entfernungs- bzw. Abstandsdaten eines Entfernungs- bzw. Abstandsmeßsystems mit ausgewertet werden, so dass abgesichert wird, dass sowohl vorne als auch hinten kein Hindernis den Stoßfänger berührt.

Optional kann ebenfalls ein den Bremsdruck wiedergebendes Bremssignal überwacht werden, um sicherzustellen dass die Fahrzeugabbremsung durch den Bordstein und nicht durch normales Abbremsen zustande gekommen ist.

Beim Vorwärtsfahren kann diese Plausibilisierung wahlweise oder zusätzlich beispielsweise durch Überwachung des Lenkwinkels erfolgen. Falls ein vorderes Rad den Randstein berührt wird das Rad um eine vertikale Achse verschwenkt bzw. weggedrückt. Das verursacht sowohl eine Lenkwinkeländerung, als auch ein Drehmoment in der Lenkstange. Somit eignet sich neben einer Überwachung des Lenkwinkels ebenso eine Überwachung des über die Lenkstange übertragenen Drehmoments. Diese beide Ereignisse können auch überwacht werden, um abzusichern, dass ein Vorderrad eine Bordsteinberührung hatte und nicht der Stoßfänger.

Zusätzlich oder anstelle der obigen Möglichkeiten kann speziell für sehr langsames Anfahren an den Bordstein die geforderte Motorleistung ausgewertet werden.

Dies ist entweder direkt oder aus einem Vergleich Gaspedalstellung/Motordrehzahl und Fahrzeugbewegung möglich.

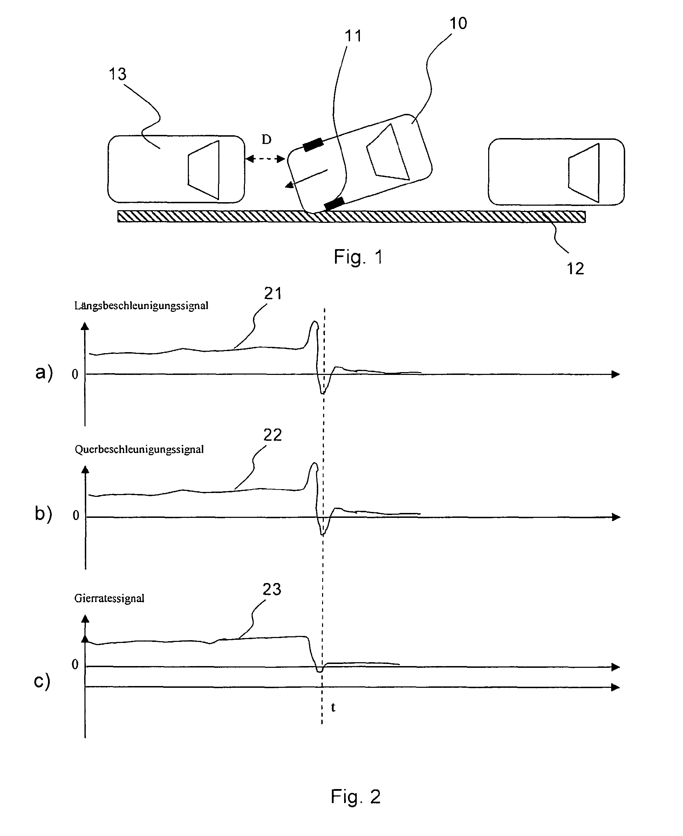

In Fig. 1 ist ein erstes Ausführungsbeispiel anhand einer ersten Situation dargestellt, bei der das hintere rechte Rad 11 eines Fahrzeugs 10 einen Bord- bzw. Randstein 12 berührt. Zur besseren Übersichtlichkeit sind in Fig. 1 nur die Hinterräder des Fahrzeugs 10 dargestellt. Das Fahrzeug 10 verfügt über Sensoren zur Erfassung von Längs- und Querbeschleunigungen, sowie der Gierrate des Fahrzeugs 10, sowie über ein Abstandsmeßsystem.

Der Verlauf des Längsbeschleunigungssignals 21 über einen Zeitraum, der den Zeitpunkt t einschließt, ist in Fig. 2a) dargestellt, der Verlauf des Querbeschleunigungssignals 22 über denselben, den Zeitpunkt t einschließenden Zeitraum, ist in Fig. 2b) dargestellt und der Verlauf des Gierratesignals 23 über denselben, den Zeitpunkt t einschließenden Zeitraum, ist in Fig. 2c) dargestellt.

Zu einem Zeitpunkt t, bei dem die Berührung erfolgt zeigen alle Signale 21, 22, 23 eine deutliche Schwingung. Zur Plausibilisierung wird überprüft, ob das Fahrzeug mit einem anderen Hindernis 13, als dem Bordstein 12, beispielsweise mit dem parkenden Fahrzeug 13, kollidiert ist. Hierzu wird auf Abstandsdaten D des Abstandsmeßsystems zurückgegriffen. Zeigen die Abstandsdaten D, dass sich kein Hindernis 13 nahe am Stoßfänger befindet, wird auf eine Bordsteinberührung geschlossen. Zeigen die Beschleunigungssensoren bzw. die Beschleunigungssignal 21, 22 und der Gierratensensor bzw. das Gierratesignal 23 deutliche Schwingungen bzw. Auslenkungen zum Zeitpunkt t und meldet das Abstandsmeßsystem zum Zeitpunkt t kein Hindernis 13 in der Nähe, dient dies einer Plausibilisierung, dass die Abbremsung durch eine Berührung eines Rads mit einem Bordstein verursacht wurde.

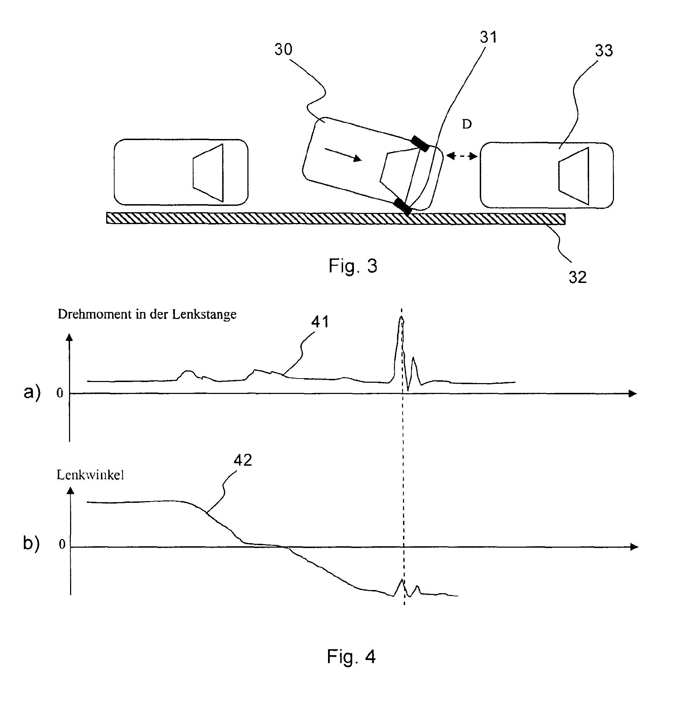

In Fig. 3 ist ein zweites Ausführungsbeispiel anhand einer Situation dargestellt, bei der das vordere rechte Rad 31 eines Fahrzeugs 30 einen Bord- bzw. Randstein 32 berührt. Zur besseren Übersichtlichkeit sind in Fig. 3 nur die Vorderräder des Fahrzeugs 30 dargestellt. Das Fahrzeug 30 verfügt über Sensoren zur Erfassung von Längs- und Querbeschleunigungen, sowie der Gierrate des Fahrzeugs 30, sowie anstelle oder zusätzlich zu einem Abstandsmeßsystem über Sensoren zur Erfassung des Drehmoments in der Lenkstange und/oder zur Erfassung des Lenkwinkels.

Zusätzlich oder anstelle zu einer Überwachung eines Abstandes D zu einem Hindernis 33 ist vorgesehen, das Drehmoment in der Lenkstange und/oder den Lenkwinkel zu berücksichtigen. Bei einer Überwachung des Lenkwinkels wird die Tatsache genutzt, dass sich die lenkbaren Räder eines Fahrzeugs bei einer Bordsteinberührung verschwenken.

Der Verlauf des Drehmoments 41 in der Lenkstange über einen Zeitraum, der den Zeitpunkt t einschließt, ist in Fig. 4a) dargestellt, und der Verlauf des Lenkwinkels 42 über denselben, den Zeitpunkt t einschließenden Zeitraum, ist in Fig. 4b) dargestellt. Auch hier zeigen sowohl das Drehmoment 41 in der Lenkstange sowie der Lenkwinkel zum Zeitpunkt t, bei dem die Berührung erfolgt, eine deutliche Schwingung.

Weiterhin kann eine zusätzliche Plausibilisierung anhand von Motorsteuerdaten vorgesehen sein. Kommt es beispielsweise bei einem Fahrzeug mit Automatikgetriebe trotz Wählhebelstellung in einer Fahrstufe und Betätigung des Gaspedals zu keiner Fahrzeugbewegung, obgleich kurz vorher die selbe Gaspedalstellung und die selbe Wählhebelstellung eine Fahrzeugbewegung zur Folge hatte, kann zusätzlich auf eine Bordsteinberührung geschlossen werden. Bei einem Fahrzeug mit Handschaltung erlaubt ein Vergleich der Gaspedalstellung zur Motordrehzahl einen ähnlichen Schluss. Beides dient jedoch vorzugsweise ausschließlich einer zusätzlichen Plausibilisierung.

## Patentansprüche

1. Verfahren zur Erkennung einer Berührung eines Bordsteins (12, 32) durch ein Fahrzeug (10, 30), bei welchem Verfahren ein aktueller Fahrwiderstand des Fahrzeugs (10, 30) ermittelt, und in Verbindung mit einer Plausibilisierung bei einer Änderung des Fahrwiderstands auf eine Bordsteinberührung geschlossen wird, **dadurch gekennzeichnet, dass** die Plausibilisierung anhand mindestens einer fahrwiderstandsunabhängigen Größe (D, 41, 42) erfolgt.

2. Verfahren nach Anspruch 1, **dadurch gekennzeichnet, dass** die fahrwiderstandsunabhängige Größe Abstandsdaten (D) zu einem Hindernis (13, 33) umfasst, wobei bei einer Änderung des Fahrwiderstands zu einem Zeitpunkt (t) in Verbindung mit zu dem selben Zeitpunkt (t) einen vorgebbaren Mindestwert überschreitenden Abstandsdaten (D) auf eine Bordsteinberührung geschlossen wird.

3. Verfahren nach Anspruch 1 oder 2, **dadurch gekennzeichnet, dass** die fahrwiderstandsunabhängige Größe ein Drehmoment (41) in der Lenkstange des Fahrzeugs (10, 30) umfasst, wobei bei einer Änderung des Fahrwiderstands zu einem Zeitpunkt (t) in Verbindung mit einem zu dem selben Zeitpunkt (t) einen vorgebbaren Mindestwert überschreitenden Drehmoment (41) in der Lenkstange auf eine Bordsteinberührung geschlossen wird.

4. Verfahren nach Anspruch 1, 2 oder 3, **dadurch gekennzeichnet, dass** die fahrwiderstandsunabhängige Größe einen Lenkwinkel (42) des Fahrzeugs (10, 30) umfasst, wobei bei einer Änderung des Fahrwiderstands zu einem Zeitpunkt (t) in Verbindung mit einer zu demselben Zeitpunkt (t) stattfindenden Lenkwinkeländerung auf eine Bordsteinberührung geschlossen wird.

5. Verfahren nach einem der vorhergehenden Ansprüche, **dadurch gekennzeichnet, dass** eine Änderung des Fahrwiderstands durch Auswertung eines Längsbeschleunigungen des Fahrzeugs wiedergebenden Signals (21) und/oder eines Querbeschleunigungen des Fahrzeugs wiedergebenden Signals (22) und/oder eine Gierrate des Fahrzeugs wiedergebenden Signals (23) ermittelt wird.

6. Verfahren nach einem der vorhergehenden Ansprüche, **dadurch gekennzeichnet, dass** zusätzlich ein Bremssignal überwacht wird, um sicherzustellen dass eine Änderung des Fahrwiderstands durch einen Bordstein (12, 32) und nicht durch normales Abbremsen zustande gekommen ist.

7. Verfahren nach einem der vorhergehenden Ansprüche, **dadurch gekennzeichnet, dass** eine zusätzliche Plausibilisierung anhand von Motorsteuerdaten vorgesehen ist.

8. Verfahren nach einem der vorhergehenden Ansprüche, **dadurch gekennzeichnet, dass** eine Änderung des Fahrwiderstands durch Auswertung einer geforderten Motorleistung ermittelt wird.

9. Fahrassistenzvorrichtung zur Unterstützung eines Fahrers eines Fahrzeugs beim Ein- und/oder Ausparken in eine bzw. aus einer Parklücke, **dadurch gekennzeichnet, dass** die Fahrassistenzvorrichtung Mittel zur Durchführung eines Verfahrens nach einem der Ansprüche 1 bis 8 umfasst.

10. Fahrassistenzvorrichtung nach Anspruch 9, **dadurch gekennzeichnet, dass** die Fahrassistenzvorrichtung ein geführtes Ein- und/oder Ausparken oder ein halbautomatisches Ein- und/oder Ausparken, oder ein vollautomatisches Ein- und/oder Ausparken ermöglicht.

11. Computerprogrammprodukt gespeichert auf einem computerverwendbaren Medium, umfassend computerlesbare Programmmittel, welche bei Ausführung des Computerprogrammprodukts auf einem Mikroprozessor mit zugehörigen Speichermitteln oder auf einem Computer diesen zur Durchführung eines Verfahrens nach einem der Ansprüche 1 bis 8 veranlassen.
